# EUROPEAN PATENT APPLICATION

(11) **EP 4 481 270 A1**
(43) Date of publication of application: **25.12.2024**
(21) Application number: 23752972.2
(22) Date of filing: 13.02.2023
(51) Int. Cl.: F21V 5/00, F21S 2/00, F21V 5/04, G02B 27/01, G02F 1/13357, F21Y 115/10, F21Y 115/30

(54) **OPTICAL MEMBER, LIGHT SOURCE DEVICE, AND HEAD-UP DISPLAY**

(30) Priority: 14.02.2022 JP 2022020892
(71) Applicant: KOITO MANUFACTURING CO., LTD., Minato-ku, Tokyo, 108-8711 (JP)
(72) Inventor: NOMURA, Keiichiro, Shizuoka-shi, Shizuoka 424-8764 (JP); TOYOSHIMA, Takanobu, Shizuoka-shi, Shizuoka 424-8764 (JP); HORI, Masahiro, Shizuoka-shi, Shizuoka 424-8764 (JP)
(74) Representative: Cabinet Beau de Loménie
(86) International application number: PCT/JP2023/004786
(87) International publication number: WO 2023/153510

(57) **Abstract**

A first lens (12) includes: an optical element in which a refracting portion (17) disposed in a central portion and a reflecting portion (18) disposed on both sides of the refracting portion (17) extend in a predetermined direction; and a diffusion portion (13) provided in at least one of a region corresponding to an emitted light flux from the refracting portion (17) of the first lens (12) and a region corresponding to an emitted light flux from the reflecting portion (18) of the first lens (12).

## Description

### TECHNICAL FIELD

The present disclosure relates to an optical member, a light source device, and a head-up display.

### BACKGROUND ART

In the related art, a light source device using a lens utilizing total reflection, a so-called total internal reflection (TIR) lens, is known. The TIR lens includes a refracting portion disposed in a central portion and a reflecting portion disposed around the refracting portion. For example, Patent Literature 1 is known as a literature that discloses a light source device using a TIR lens.

An optical unit (light source device) disclosed in Patent Literature 1 includes a plurality of light sources (light emitting elements), a plurality of optical elements (TIR lenses) having a function of a collimator lens and disposed on the plurality of light sources, and a plurality of lens arrays disposed on an emission surface side of the plurality of optical elements, and forms a plurality of different light distribution patterns. The optical unit disclosed in Patent Literature 1 is mainly used as a vehicle lamp.

### CITATION LIST

### PATENT LITERATURE

Patent Literature 1: JP2021-189306A

### SUMMARY OF INVENTION

### TECHNICAL PROBLEM

The light source device as described above may be used as an illumination device (backlight) for a liquid crystal display of a head-up display (hereinafter, may be referred to as "HUD") mounted on a vehicle or the like. The light source device used for the HUD is required to be particularly bright and have no unevenness, that is, have high luminance and a uniform luminance distribution. In other words, it is required that utilization efficiency of a light flux is high and a degree of light diffusion is high. The TIR lens can also condense light, which is in the light emitted from the light emitting element, that has a large angle (directivity angle) with respect to an emission axis and spreads outward. Therefore, the TIR lens is often used as an optical element suited for this purpose.

However, in the case of the TIR lens, due to an action of the refracting portion and the reflecting portion around the refracting portion, when viewed in a plane perpendicular to an axis of travel of the emitted light from the light emitting element, a luminance distribution is generally divided into three luminance distributions: a central region and peripheral regions surrounding the central region. That is, it is generally difficult to reduce a luminance difference between the central region and the peripheral region. When three separated light fluxes reach eyes of an observer through the liquid crystal display, the light fluxes are divided into three and are visually recognized as luminance unevenness.

Therefore, an object of the present disclosure is to provide an optical member, a light source device, and a head-up display in which luminance unevenness is reduced.

### SOLUTION TO PROBLEM

An optical member according to the present disclosure includes: an optical element in which a refracting portion disposed in a central portion and a reflecting portion disposed on both sides of the refracting portion extend in a predetermined direction; and a diffusion portion provided in at least one of a region corresponding to an emitted light flux from the refracting portion of the optical element and a region corresponding to an emitted light flux from the reflecting portion.

In the optical member according to the present disclosure, in controlling light flux of emitted light from the light emitting element, it is possible to reduce a decrease in luminance in the vicinity of a boundary between the emitted light flux from the refracting portion and the emitted light flux from the reflecting portion by an action of the diffusion portion. Therefore, it is possible to provide an optical member in which luminance unevenness is reduced.

A light source device according to the present disclosure includes: the optical member according to any one of the above aspects; and a plurality of light emitting elements disposed on an incident surface side of the optical member along the predetermined direction; and a lens portion configured to guide, to an illumination target, light from the plurality of light emitting elements, which is emitted from the optical member.

In the light source device according to the present disclosure, an illumination pattern having a uniform luminance distribution can be obtained by an action of the optical member according to any one of the above aspects. Therefore, it is possible to provide a light source device in which luminance unevenness is reduced.

A light source device according to the present disclosure includes: a plurality of light emitting elements disposed on an incident surface side of the optical member along the predetermined direction; and a lens portion configured to guide, to an illumination target, light from the plurality of light emitting elements, which is emitted from the optical member, in which the diffusion portion is formed on an incident surface of the lens portion.

A head-up display according to the present disclosure includes: the light source device according to any one of the above aspects; a spatial light modulating unit as the illumination target configured to receive light from the light source device from an incident surface and emit light modulated in accordance with image information from an emission surface; and a projection unit configured to project the light emitted from the spatial light modulating unit.

In the head-up display according to the present disclosure, the spatial light modulating unit can be illuminated with an illumination pattern having a uniform luminance distribution by an action of the light source device according to any one of the above aspects. Therefore, it is possible to provide a head-up display that generates a display image with reduced luminance unevenness.

### ADVANTAGEOUS EFFECTS OF INVENTION

The present disclosure can provide an optical member, a light source device, and a head-up display in which luminance unevenness is reduced.

### BRIEF DESCRIPTION OF DRAWINGS

[Fig. 1A] Fig. 1A is a front cross-sectional view showing an example of an optical member and a light source device according to a first embodiment.
[Fig. 1B] Fig. 1B is a side cross-sectional view showing an example of the optical member and the light source device according to the first embodiment.
[Fig. 2A] Fig. 2A is a front cross-sectional view showing an optical member and a light source device according to a comparative example.
[Fig. 2B] Fig. 2B is a side cross-sectional view showing the optical member and the light source device according to the comparative example.
[Fig. 3A] Fig. 3A is a diagram showing a simulation result of an illuminance distribution of light emitted from a first lens of the light source device according to the first embodiment.
[Fig. 3B] Fig. 3B is a diagram showing a simulation result of an illuminance distribution of light emitted from a first lens of the light source device according to the comparative example.
[Fig. 3C] Fig. 3C is a diagram showing a display image of HUD according to the first embodiment.
[Fig. 3D] Fig. 3D is a diagram showing a display image of HUD according to the comparative example.
[Fig. 4] Fig. 4 is a side cross-sectional view showing an example of an optical member and a light source device according to a second embodiment.

### DESCRIPTION OF EMBODIMENTS

Hereinafter, embodiments of the present disclosure will be described in detail with reference to the drawings. The same or equivalent components, members, and processes shown in the drawings are denoted by the same reference signs, and redundant description thereof will be omitted as appropriate. In the following description, a form in which an optical member and a light source device according to the present disclosure are applied to an HUD mounted on a vehicle or the like will be described as an example.

### (First Embodiment)

### <Optical Member and Light Source Device>

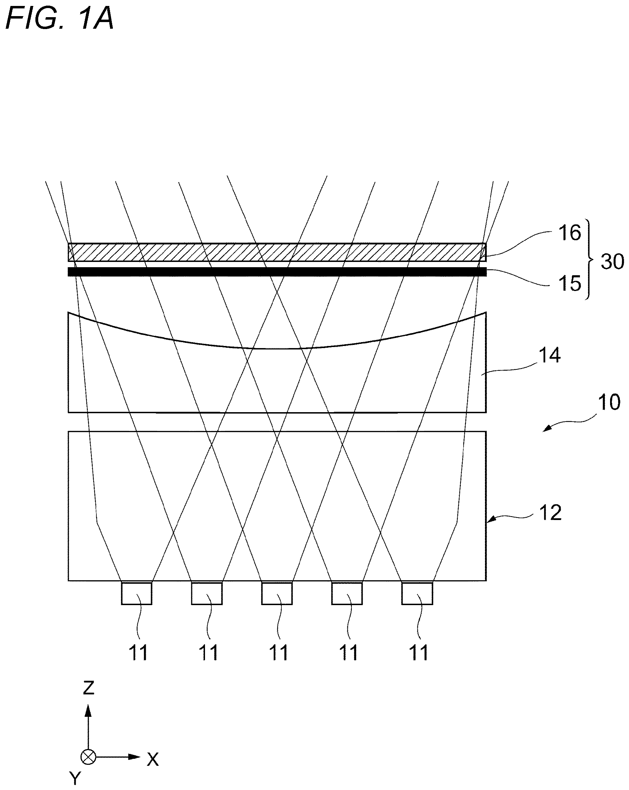

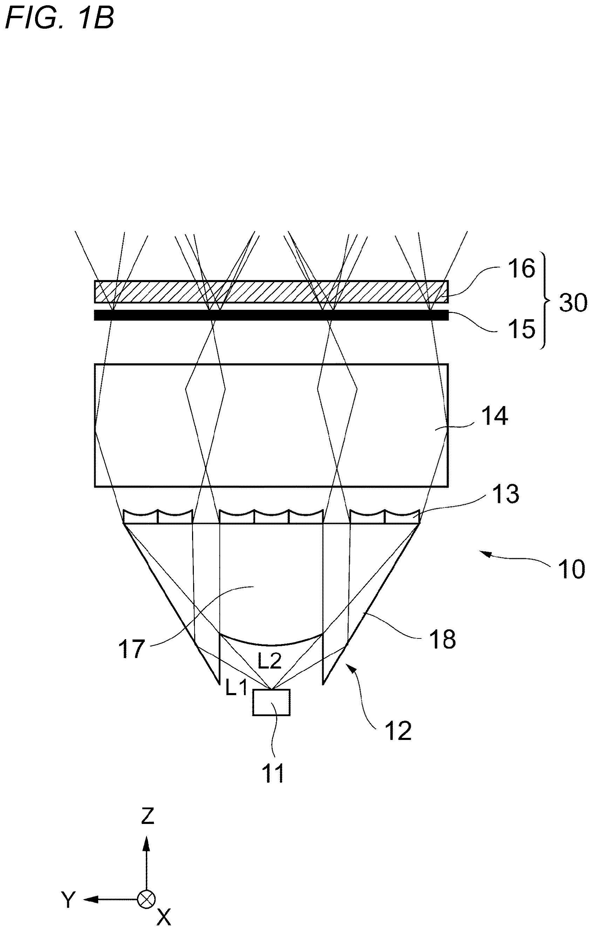

An optical member and a light source device according to the present embodiment will be described with reference to Figs. 1A to 3D. Fig. 1A is a front cross-sectional view of a light source device 10 according to the present embodiment. Fig. 1B is a side cross-sectional view of the light source device 10.

As shown in Figs. 1A and 1B, the light source device 10 includes a plurality of light emitting elements 11 (in Fig. 1A, five light emitting elements are illustrated), a first lens 12, and a second lens 14. In the present embodiment, the first lens 12 is the optical member according to the present disclosure. Figs. 1A and 1B also show an illumination target 30, and the illumination target 30 in the present embodiment is a liquid crystal display as an example. The illumination target 30 includes a liquid crystal display unit 16 and a diffusion sheet 15. The illumination target 30 functions as a spatial light modulating unit that receives light from the light source device 10 from an incident surface and emits light modulated according to image information from an emission surface. The diffusion sheet 15 functions to diffuse highly directional light deflected by the first lens 12 and the second lens 14 and emit the light to the liquid crystal display unit 16 so that the liquid crystal display unit 16 is illuminated more uniformly.

The plurality of light emitting elements 11 are disposed on an incident surface side of the first lens 12. The light emitting elements 11 are semiconductor light emitting elements such as light emitting diodes (LEDs), and are arranged in a predetermined direction (an X-axis direction in an example of Fig. 1A). An emission color of the light emitting element 11 is not particularly limited, and is white as an example in the present embodiment. In the present embodiment, the number of rows of the light emitting elements 11 arranged is one, but may be two or more. The light emitting element 11 is not limited to an LED, and may be a semiconductor laser or the like.

The first lens 12 and the second lens 14 have a function of guiding light emitted from the light emitting element 11 to an illumination region of the illumination target 30 in combination. In the present embodiment, the illumination region is a rear surface (a surface on the light emitting element 11 side) of the diffusion sheet 15 as an example. However, where to set the illumination region may be determined in consideration of a specification of the light source device and the like, and may be, for example, a rear surface of the liquid crystal display unit 16.

The first lens 12 is disposed above the plurality of light emitting elements 11 and extends along an arrangement direction (X-axis direction) of the light emitting elements 11. The first lens 12 has a function of condensing emitted light from the light emitting element 11 having a large directivity angle and emitting the light as parallel light or light close to parallel light (hereinafter, both are collectively referred to as "substantially parallel light"). The emitted light having a large directivity angle from the light emitting element 11 is, for example, light spreading outward in a direction indicated by a light beam L1 in Fig. 1B. An emitted light having a relatively small directivity angle with respect to the light beam L1 is light that spreads further inward in a direction indicated by a light beam L2 in Fig. 1B. That is, the first lens 12 can also efficiently condense the emitted light in the direction of the light beam L1.

In the present embodiment, a TIR lens is used as an example of the first lens 12. As shown in Fig. 1B, the first lens 12 according to the present embodiment includes a diffusion portion 13, and the diffusion portion 13 also extends along the X-axis direction. In other words, the diffusion portion 13 is formed on an upper portion of the first lens 12 shown in Fig. 1A from a right end to a left end. In the present embodiment, a lenticular lens is used as an example of the diffusion portion 13. The "first lens 12" is an example of the "optical member" according to the present disclosure. Details of the first lens 12 including the diffusion portion 13 will be described later.

The second lens 14 controls a light flux such that the substantially parallel light emitted from the first lens 12 uniformly illuminates the entire illumination region. Accordingly, a shape of the second lens 14 and positive and negative power are selected in accordance with this purpose, and in the present embodiment, a concave lens is used as an example of the second lens 14. If the entire illumination region is uniformly illuminated by only the first lens 12, the second lens 14 may be omitted. The first lens 12 and the second lens 14 are formed of, for example, a resin such as an acrylic resin, or glass. The "second lens 14" is an example of a "lens portion" according to the present disclosure. In the following description, a lens disposed at a position of the first lens 12 and a lens disposed at a position of the second lens 14 may be referred to as a "first common lens" and a "second common lens", respectively.

Next, the first lens 12 will be described in more detail. As shown in Fig. 1B, the first lens 12 includes a refracting portion 17 and a reflecting portion 18. The refracting portion 17 refracts and condenses emitted light from the light emitting element 11 and emits the light toward the second lens 14. The refracting portion 17 is disposed in a central portion of the first lens 12. The reflecting portion 18 reflects and condenses emitted light from the light emitting element 11, and emits the light toward the second lens 14. The reflecting portions 18 are disposed on both sides of the refracting portion 17. The refracting portion 17 and the reflecting portion 18 are examples of an "optical element" according to the present disclosure.

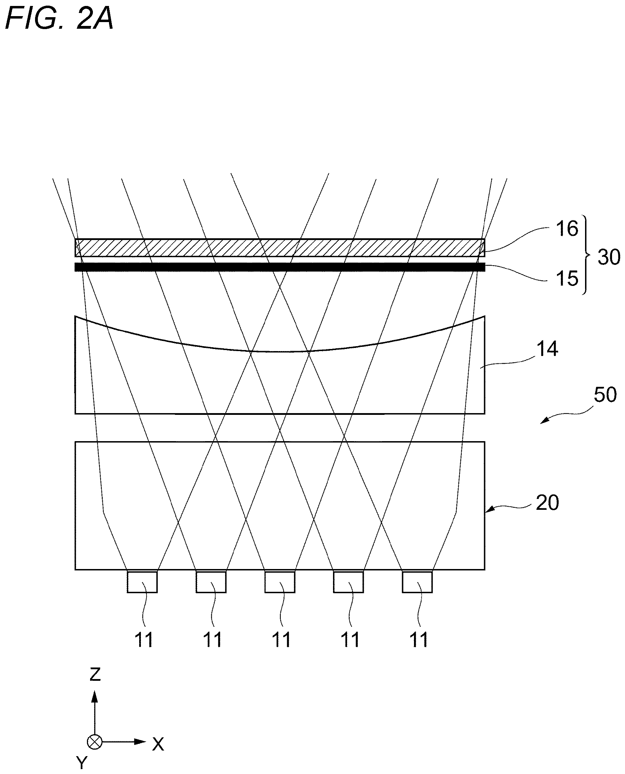

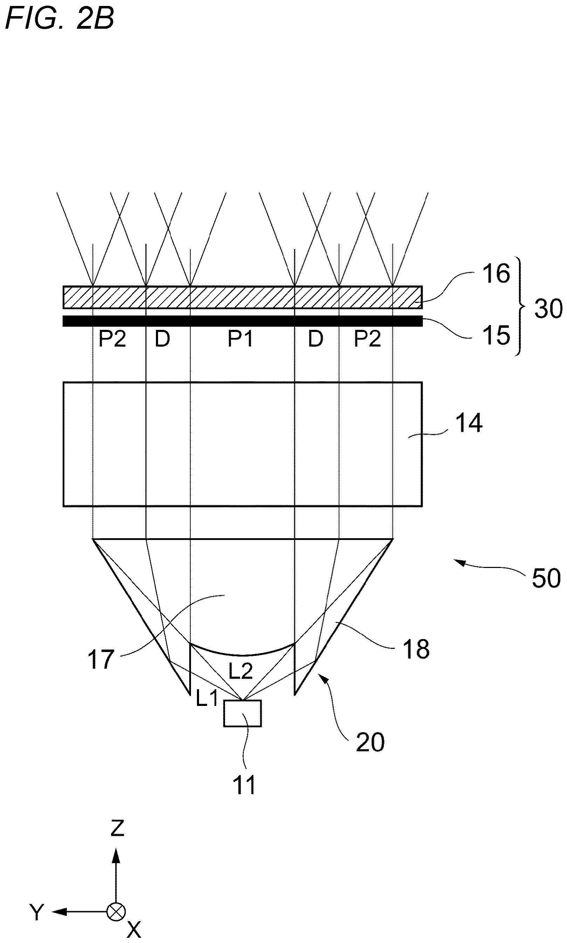

Here, in order to describe features of the light source device 10 according to the present embodiment, a light source device 50 according to a comparative example will be described with reference to Figs. 2A and 2B. Fig. 2A is a front cross-sectional view of the light source device 50. Fig. 2B is a side cross-sectional view of the light source device 50. The light source device 50 has a form in which the first lens 12 in the light source device 10 is replaced with a first lens 20. Therefore, other configurations are similar as those of the light source device 10, and the same reference signs are given to similar configurations, and detailed description thereof will be omitted.

As shown in Fig. 2B, the first lens 20 is a TIR lens similar to the first lens 12, and includes the refracting portion 17 and the reflecting portion 18, but does not include the diffusion portion 13. Due to an action of the first lens 20 and the second lens 14, the light emitted from the light emitting element 11 forms illumination patterns P1 and P2 on the rear surface of the diffusion sheet 15, which is the illumination region. The illumination pattern P1 is an illumination pattern formed in a central region by the refracting portion 17. The illumination pattern P2 is an illumination pattern formed in a peripheral region of the central region by the reflecting portion 18. Accordingly, in the side cross-sectional view shown in Fig. 2B, the illumination pattern P2 is shown on either side of the illumination pattern P1. A reason why the illumination patterns P1 and P2 are formed will be described below.

As described above, since the first lens 20 is a TIR lens, light having a large directivity angle from the light emitting element 11 and spreading outward can also be condensed, and utilization efficiency of a light flux is improved. In Fig. 2B, light having a large directivity angle and spreading outward is indicated by the light beam L1. Light having a small directivity angle relative to the light beam L1 and spreading inward is indicated by the light beam L2.

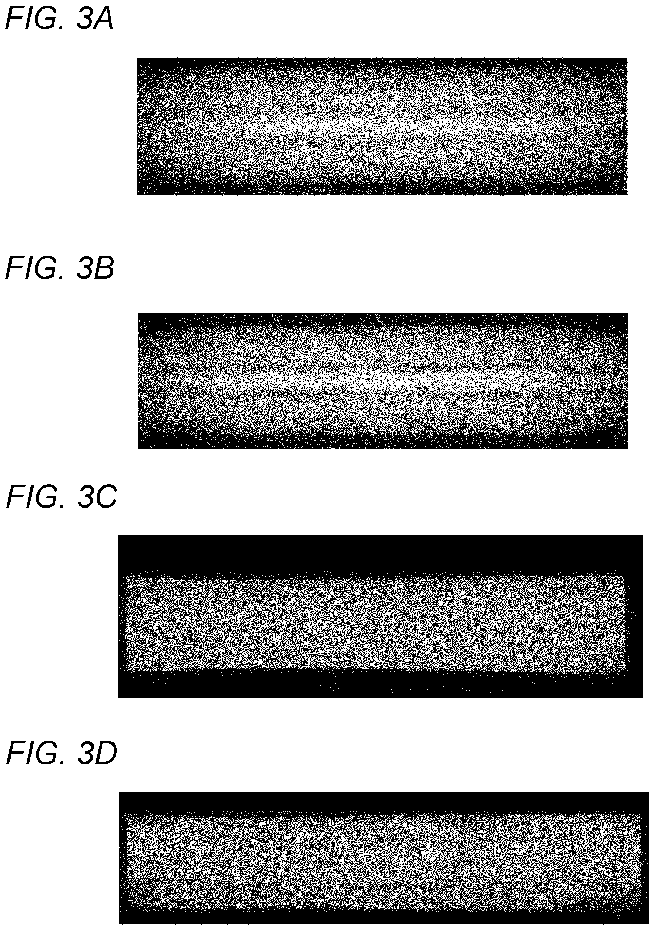

Here, an amount of emitted light from the light emitting element 11 generally decreases as the directivity angle increases. That is, a light amount of the light beam L1 shown in Fig. 2B is smaller than a light amount of the light beam L2. When the light beams are emitted from the first lens 20, an illumination pattern caused by the light beam L1 enters inside an illumination pattern caused by the light beam L2, and positions are reversed when viewed in a cross section perpendicular to an emission axis of the light emitting element 11. As a result, a low-luminance region D having relatively low luminance compared with surroundings is formed between the illumination pattern P1 and the illumination pattern P2. Due to the formation of the low-luminance region D, the entire illumination pattern when viewed in the cross section perpendicular to the emission axis of the light emitting element 11 is separated into three. For the above reasons, the illumination patterns P1 and P2 are formed. Fig. 3B shows a simulation result of an illuminance distribution of light emitted from the first lens 20. It can also be seen from this simulation result that the illumination pattern caused by light emitted from the light emitting element 11 is separated into three.

As described above, when the illumination patterns P1 and P2 are formed, that is, when three separated light fluxes reach eyes of an observer through the liquid crystal display unit 16, the illumination patterns P1 and P2 become three linear illuminations and are observed as luminance unevenness. In order to prevent this phenomenon, the diffusion portion 13 is disposed in the present embodiment.

On the other hand, as shown in Fig. 1B, the diffusion portion 13 is formed on an emission surface of the first lens 12 of the light source device 10. A plurality of diffusion portions 13 are provided (Fig. 1B illustrates an example in which two diffusion portions 13 are provided) in each of a region corresponding to an emitted light flux from the refracting portion 17 (hereinafter, a "refractive light flux region") and a region corresponding to an emitted light flux from the reflecting portion 18 (hereinafter, a "reflective light flux region"). However, the present invention is not limited thereto, and the diffusion portion 13 may be provided in at least one of the refractive light flux region and the reflective light flux region. In other words, the diffusion portion 13 may be formed on at least one of an emission surface of the refracting portion 17 and an emission surface of the reflecting portion 18. The number of diffusion portions 13 is not limited to two for each region.

As described above, in the present embodiment, the diffusion portion 13 is implemented by a lenticular lens extending in the X-axis direction. As described above, the number of lenticular lenses arranged in the refractive light flux region and the reflective light flux region is not limited to two for each region, and an appropriate number may be set in consideration of a degree of diffusion or the like. The number of lenticular lenses may be defined by an arrangement density when viewed in a Y-axis direction, for example, and the arrangement density in this case may be about 10 lenses/cm or more and 250 lenses/cm or less as an example. If the arrangement density is less than 10 lenses/cm, the diffusion is insufficient, and if the arrangement density is more than 250 lenses/cm, the diffusion is excessive, which is an adverse effect.

Since the light source device 10 according to the present embodiment is provided with the first lens 12 (optical member) including the diffusion portion 13, light from the light emitting element 11 emitted through the first lens 12 is mainly diffused and spread in the Y-axis direction. Therefore, formation of the low-luminance region D shown in Fig. 2B is prevented, and luminance of the illumination patterns P1 and P2 is made more uniform. As a result, illumination unevenness on the illumination target 30 is reduced. Fig. 3A shows a simulation result of an illuminance distribution of light emitted from the first lens 12 of the light source device 10. As is clear from comparison with Fig. 3B, it is understood that the formation of the low-luminance region D is prevented and the overall luminance is more uniform.

As described above, according to the optical member (first lens 12) according to the present embodiment, since the diffusion portion 13 is provided, it is possible to diffuse light incident from the incident surface and spread the light outward. Further, when a lenticular lens is used as the diffusion portion 13, light beams are folded and diffused, so that the light beams are mixed, and uniformity of the illumination pattern and the utilization efficiency of the light flux are further improved. The diffusion portion 13 is not limited to a lenticular lens, and another lens, for example, a Fresnel lens may be used. An optical element having a concave shape or an aspherical shape may be used. As described above, the optical member (first lens 12) according to the present embodiment can be suitably used for an optical device requiring diffusion of light.

According to the light source device 10 according to the present embodiment, since the first lens 12 including the diffusion portion 13 is adopted, division of the luminance as in the illumination patterns P1 and P2 is prevented, and the luminance of the low-luminance region D is made uniform with luminance of the surroundings. Therefore, the light source device in which luminance unevenness is reduced can be implemented.

### <Head-up Display>

In a head-up display (HUD), an HUD unit is stored in, for example, a dashboard of a vehicle, and an image from the HUD unit is displayed by being projected on, for example, a windshield of the vehicle. The HUD unit is a unit in which an image light source represented by the liquid crystal display is reflected by a plane mirror and enlarged by a concave mirror or the like, and the generated image is reflected by the windshield and is visually recognized by being guided to eyes of a driver.

The HUD according to the present embodiment includes the light source device 10, the illumination target 30 (liquid crystal display), and a projection unit (not shown). The projection unit includes, for example, the above-described plane mirror, concave mirror, and windshield. A display image is displayed by causing the projection unit to project emitted light from the illumination target 30.

According to the head-up display according to the present embodiment, since the light source device 10 is adopted, a display image in which luminance unevenness is reduced can be implemented. Fig. 3C shows a simulation result of a display image of the HUD (HUD according to the present embodiment) using the light source device 10 according to the present embodiment. Fig. 3D shows a simulation result of a display image of the HUD (HUD according to the comparative example) using the light source device 50 according to the comparative example. As is clear from Fig. 3D, in the display image according to the HUD according to the comparative example, streaks caused by the low-luminance region D clearly appear. In contrast, in the display image according to the HUD according to the present embodiment shown in Fig. 3C, it can be seen that formation of streaks due to the low-luminance region D is prevented and a luminance distribution is uniform as a whole.

### (Second Embodiment)

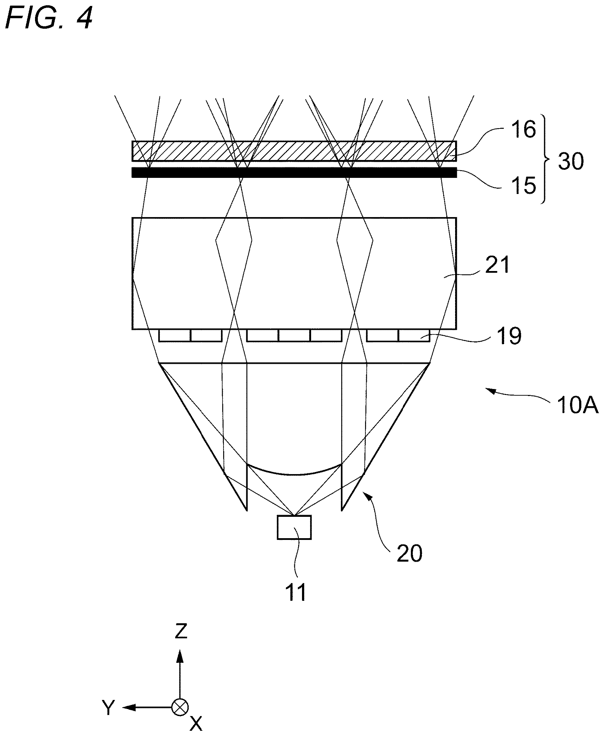

An optical member, the light source device, and the head-up display according to the present embodiment will be described with reference to Fig. 4. Fig. 4 is a side cross-sectional view of a light source device 10A according to the present embodiment. A front cross-sectional view of the light source device 10A is similar as that of Fig. 1A and is omitted. The light source device 10A has a form in which the first lens 12 in the light source device 10 is replaced with the first lens 20 that is a normal TIR lens similar to the light source device 50 according to the comparative example, and the second lens 14 is replaced with the second lens 21. Therefore, other configurations are similar as those of the light source device 10, and the same reference signs are given to similar configurations, and detailed description thereof will be omitted.

As shown in Fig. 4, the second lens 21 includes a diffusion portion 19. The diffusion portion 19 is formed on an incident surface of the second lens 21. A shape of the diffusion portion 19 is not particularly limited, and an appropriate shape can be selected according to a degree of diffusion by a lenticular lens, a concave lens, or the like. A combination of the first lens 20 and the diffusion portion 19 is an example of an optical member according to the present embodiment.

According to the optical member according to the present embodiment, a light flux in the vicinity of a boundary between the illumination patterns P1 and P2 formed by the first lens 20 is diffused by the diffusion portion 19, thereby preventing formation of the low-luminance region D. As a result, emitted light from the second lens 21 becomes emitted light having less luminance unevenness. According to the light source device 10A, since an illumination region can be illuminated with a light flux from the second lens 21 with reduced luminance unevenness, the light source device with reduced luminance unevenness can be obtained. According to the head-up display using the light source device 10A, since the illumination target 30 (liquid crystal display) can be illuminated with a light source with reduced luminance unevenness, a display image with reduced luminance unevenness can be obtained.

In each of the above embodiments, a form is described as an example in which the diffusion portion is formed on the emission surface of the first common lens or the incident surface of the second common lens, that is, the diffusion portion is formed integrally with the first common lens or the second common lens, but the present invention is not limited to this. For example, the diffusion portion may be an independent optical element, and may be disposed separately between the first common lens and the second common lens. In this case, a combination of the first common lens and the diffusion portion constitutes the "optical member" according to the present disclosure.

The present application claims the priority based on Japanese patent application No. 2022-020892 filed on February 14, 2022, and all the contents described in the Japanese patent application are incorporated.

## Claims

1. An optical member comprising:
an optical element in which a refracting portion disposed in a central portion and a reflecting portion disposed on both sides of the refracting portion extend in a predetermined direction; and
a diffusion portion provided in at least one of a region corresponding to an emitted light flux from the refracting portion of the optical element and a region corresponding to an emitted light flux from the reflecting portion.

2. The optical member according to claim 1,
wherein the diffusion portion is a lenticular lens formed to extend in the predetermined direction.

3. The optical member according to claim 1 or 2,
wherein the diffusion portion is formed on at least one of an emission surface of the refracting portion and an emission surface of the reflecting portion.

4. A light source device comprising:
the optical member according to any one of claims 1 to 3;
a plurality of light emitting elements disposed on an incident surface side of the optical member along the predetermined direction; and
a lens portion configured to guide, to an illumination target, light from the plurality of light emitting elements, which is emitted from the optical member.

5. A light source device comprising:
the optical member according to claim 1 or 2;
a plurality of light emitting elements disposed on an incident surface side of the optical member along the predetermined direction; and
a lens portion configured to guide, to an illumination target, light from the plurality of light emitting elements, which is emitted from the optical member,
wherein the diffusion portion is formed on an incident surface of the lens portion.

6. A head-up display comprising:
the light source device according to claim 4 or 5;
a spatial light modulating unit as the illumination target configured to receive light from the light source device from an incident surface and emit light modulated in accordance with image information from an emission surface; and
a projection unit configured to project the light emitted from the spatial light modulating unit.
